# EUROPEAN PATENT APPLICATION

(11) **EP 2 503 772 A1**
(43) Date of publication of application: **26.09.2012**
(21) Application number: 10791411.1
(22) Date of filing: 28.05.2010
(51) Int. Cl.: H04N 5/00, G06F 9/44, H04L 29/06

(54) **SET TOP BOX VERSION UPGRADE METHOD AND SYSTEM**

(30) Priority: 25.11.2009 CN 200910241529
(71) Applicant: ZTE Corporation, Shenzhen, Guangdong 518057 (CN)
(72) Inventor: WU, Xin, Shenzhen Guangdong 518057 (CN); LIU, Wei, Shenzhen Guangdong 518057 (CN); LIU, Fu, Shenzhen Guangdong 518057 (CN); LI, Heng, Shenzhen Guangdong 518057 (CN)
(74) Representative: Manitz, Finsterwald & Partner GbR
(86) International application number: PCT/CN2010/073346
(87) International publication number: WO 2010/148905

(57) **Abstract**

The present invention discloses a method for version upgrade of a set top box, and the method includes: an IPTV set top box starting up version upgrade, and judging whether to perform the version upgrade by adopting a multicast upgrade mode, and downloading and analyzing an upgrade configuration file on an upgrade server when the multicast upgrade mode is not adopted; and if the upgrade configuration file includes a multicast upgrade address and multicast upgrade is enabled, then the IPTV set top box performing the version upgrade by adopting the multicast upgrade mode; if the upgrade configuration file does not include the multicast upgrade address, then performing the version upgrade by adopting an HTTP upgrade mode. Accordingly, the present invention also discloses an apparatus for version upgrade of a set top box, including an upgrade server and an IPTV set top box. Therefore, the present invention can enhance the speed of the version upgrade of the IPTV set top box, and save the network resources.

## Description

### Technical Field

The present invention relates to a multimedia terminal, and in particular, to a method and system for version upgrade of a set top box.

### Background of the Related Art

The interactive internet protocol television (IPTV) is one brand new technology for providing a variety of interactive services including a digital television to home users by using a broadband cable television network. The IPTV realizes functions of receiving a video on demand program, video broadcasting and surfing the Internet, etc., by using a computer/set top box and television. Wherein, the set top box adopted by the IPTV, i.e., an IPTV set top box, is a video decoding terminal and has basic functions such as the data exchange of the computer, etc. Compared with a traditional digital set top box, the IPTV set top box realizes the integration of three parts of video, voice and data. Moreover, the IPTV set top box, as one typical multimedia terminal device, reveals a good development prospect with its abundant program sources, convenient operation mode and strong multimedia service functions. With the development of the network in recent years, in use of the IPTV set top box, user requirements will increase continually, and in order to meet the user requirements, the functions of the IPTV set top box is needed to be promoted, so upgrading the version of the IPTV set top box is a problem to be solved primarily.

At present, in commercial IPTV services, the version upgrade of the IPTV set top box generally adopts a way of a hypertext transfer protocol (HTTP), that is: after the IPTV set top box boots, it connects an upgrade server and judges whether to upgrade the version, and if it needs to upgrade the version, then it downloads a version upgrade file from the upgrade server by adopting the HTTP.

However, there is a bandwidth problem when upgrading the version for the IPTV set top box by adopting the HTTP upgrade mode; that is: if a number of IPTV set top boxes connect the same one upgrade server, then, when there is a new version needing to be upgraded, at the same time, there will be a large number of IPTV set top boxes connecting the upgrade server and attempting to download the upgrade file. A large number of the IPTV set top boxes initiate the HTTP connections to the upgrade server at the same time, thus the requirement for the bandwidth of the upgrade server is very high. Moreover, since the quantity of users of the IPTV set top boxes increase rapidly, if the HTTP upgrade mode is still adopted, it must be caused that the upgrade server works unusually, and the upgrade speed of the IPTV set top box is reduced.

### Content of the Invention

In view of this, the main objective of the present invention is to provide a method and system for version upgrade of a set top box, which can enhance the upgrade speed of the IPTV set top box version and save the network resources.

In order to achieve the above-mentioned objective, the present invention discloses a method for version upgrade of a set top box, comprising: an internet protocol television (IPTV) set top box starting up version upgrade, and judging whether to perform the version upgrade by adopting a multicast upgrade mode, and downloading and analyzing an upgrade configuration file on an upgrade server when the multicast upgrade mode is not adopted; and if the upgrade configuration file includes a multicast upgrade address and enabling multicast upgrade, then the IPTV set top box performing the version upgrade by adopting the multicast upgrade mode; if the upgrade configuration file does not include the multicast upgrade address, then performing the version upgrade by adopting a hypertext transfer protocol (HTTP) upgrade mode.

Wherein, the method further comprises the upgrade server setting a version upgrade mode, wherein, the process of setting the version upgrade mode further comprises: when starting a new round of the version upgrade, the upgrade server making the IPTV set top box adopt the multicast upgrade mode by setting the upgrade configuration file, stopping adopting the multicast upgrade mode after a first time period, and switching to the HTTP upgrade mode; and wherein, the upgrade configuration file comprises: a version number of a current upgrade file, a multicast upgrade address configuration item and a multicast upgrade enabling item; and the first time period depends on the number of IPTV set top boxes actually connecting to the upgrade server and a current network condition.

In the above-mentioned method, the method further comprises the upgrade server setting a version upgrade mode, wherein, the process of setting the version upgrade mode further comprises: the upgrade server setting a threshold which measures the number of connecting IPTV set top boxes; in the HTTP upgrade mode, when the number of the IPTV set top boxes connecting to the upgrade server exceeds the threshold, then switching to the multicast upgrade mode, performing the version upgrade to the IPTV set top boxes, and stopping the multicast upgrade after a second time period; wherein, the threshold is set according to performances of the upgrade server and a network condition; and the second time period is set according to the number of IPTV set top boxes actually connecting to the upgrade server and the network condition.

Wherein, the judging whether to adopt the multicast upgrade mode comprises: the IPTV set top box reading an upgrade server address of the IPTV set top box, if the upgrade server address is the multicast upgrade address, then adopting the multicast upgrade mode; and if the upgrade server address is an HTTP upgrade address, then downloading and analyzing the upgrade configuration file on the upgrade server; or, the IPTV set top box judging whether to adopt the multicast upgrade mode according to an upgrade address sent by a strategy server; if the upgrade address sent by the strategy server is the multicast upgrade address, then selecting the multicast upgrade mode; and if the upgrade address sent by the strategy server is an HTTP upgrade address, then selecting the HTTP upgrade mode.

In the above-mentioned method, the IPTV set top box adopting the multicast upgrade mode comprises: the IPTV set top box joining in a multicast group, receiving and analyzing upgrade header data; judging whether to upgrade, if not upgrading, then exiting the version upgrade; and if upgrading, then performing an upgrade initialization, and receiving and storing upgrade data; and, after the upgrade data is received completely, the IPTV set top box updating a version according to the upgrade data; wherein, the upgrade header data comprises: a version number of a current upgrade file, a block size of the upgrade file and block quantity of the upgrade file; and the upgrade data are the upgrade file which is divided into several multicast data packets.

Wherein, the IPTV set top box judging whether to upgrade comprises: the IPTV set top box judging whether to perform the version upgrade according to the version number of the current upgrade file analyzed and obtained from the upgrade header data; and if the version number of the current upgrade file is different from the corresponding version number in the IPTV set top box, then performing the version upgrade; and if the version number of the current upgrade file is the same with the corresponding version number in the IPTV set top box, then not performing the version upgrade.

In the above-mentioned method, the method further comprises judging whether the upgrade data is received completely, which is: judging whether the upgrade data is received completely according to the block size of the upgrade file and the block quantity of the upgrade file analyzed and obtained from the upgrade header data; if a product of the block size of the upgrade file and the block quantity of the upgrade file is the same as the size of the upgrade file, then receiving the upgrade data completely; and if the product of the block size of the upgrade file and the block quantity of the upgrade file is less than the size of the upgrade file, then continuing to receive the upgrade data.

In order to achieve the above-mentioned method, the present invention provides system for version upgrade of a set top box, comprising an upgrade server and an internet protocol television (IPTV) set top box; wherein, the upgrade server is configured to provide an upgrade configuration file; and the IPTV set top box is configured to start up version upgrade and judge whether to perform the version upgrade by adopting a multicast upgrade mode, download and analyze the upgrade configuration file on the upgrade server when the multicast upgrade mode is not adopted, and select a version upgrade mode according to the upgrade configuration file and perform the version upgrade.

Wherein, the upgrade server comprises: a mode switching unit, configured to, when starting a new round of the version upgrade, make the IPTV set top box adopt the multicast upgrade mode by setting the upgrade configuration file by the upgrade server, stop multicast upgrade after a first time period, and switch to a hypertext transfer protocol (HTTP) upgrade mode; wherein, the upgrade configuration file comprises: a version number of a current upgrade file, a multicast upgrade address configuration item, and a multicast upgrade enabling item; the first time period depends on the number of the IPTV set top boxes actually connecting to the upgrade server and a current network condition. And/or, the mode switching unit is configured to set a threshold which measures the number of connecting IPTV set top boxes by the upgrade server; in the HTTP upgrade mode, when the number of IPTV set top boxes connecting to the upgrade server exceeds the threshold, then switch to the multicast upgrade mode, perform the version upgrade to the IPTV set top boxes, and stop the multicast upgrade after a second time period; wherein, the threshold is set according to performances of the upgrade server and a network condition; and the second time period is set according to the number of the IPTV set top boxes actually connecting to the upgrade server and the network condition.

Wherein, the IPTV set top box comprises: an upgrade startup unit, a first mode judgment unit, a second mode judgment unit, a multicast upgrade unit and an HTTP upgrade unit; wherein, the upgrade startup unit is configured to start up the version upgrade; the first mode judgment unit is configured to judge whether to perform the version upgrade by adopting the multicast upgrade mode, and notify the second mode judgment unit when the version upgrade is not performed by adopting the multicast upgrade mode; and notify the multicast upgrade unit when performing the version upgrade by adopting the multicast upgrade mode; the second mode judgment unit is configured to download and analyze the upgrade configuration file on the upgrade server, judge whether the upgrade configuration file includes a multicast upgrade address, notify the multicast upgrade unit when the upgrade configuration file includes the multicast upgrade address and enabling the multicast upgrade, and notify the HTTP upgrade unit when the upgrade configuration file does not include the multicast upgrade address; the multicast upgrade unit is configured to perform the version upgrade by adopting the multicast upgrade mode; and the HTTP upgrade unit is configured to perform the version upgrade by adopting the HTTP upgrade mode.

In the above-mentioned system, the multicast upgrade unit further comprises: a first data processing subunit, an upgrade judgment subunit, a second data processing subunit and a version updating subunit; wherein, the first data processing subunit is configured to receive and analyze upgrade header data; the upgrade judgment subunit is configured to judge whether to perform upgrade according to a version number of a current upgrade file analyzed and obtained by the first data processing subunit, and notify the second data processing subunit when performing the upgrade, and exit this upgrade when not performing the upgrade; the second data processing subunit is configured to receive and store upgrade data, and is configured to judge whether the upgrade data is received completely; the version updating subunit is configured to, after the upgrade data is received completely, update a version according to the upgrade data; wherein, the upgrade header data comprises: the version number of the current upgrade file, a block size of the upgrade file and block quantity of the upgrade file; and the upgrade data is the upgrade file which is divided into several multicast data packets.

It can be seen from the above-mentioned technical scheme, the present invention performs the version upgrade to the IPTV set top box by adopting the way of combining the multicast upgrade mode and the HTTP upgrade mode. The multicast mode is adopted when the upgrade users are centralized, and the previous HTTP mode is adopted to upgrade when the upgrade users are few.

The present invention upgrades the version of the IPTV set top box by combining the multicast upgrade mode and the HTTP upgrade mode, which not only reduces the requirement for the bandwidth by the upgrade server, but also enhances the speed and reliability of the version upgrade of the IPTV set top box. And, it can also be compatible with the existing HTTP upgrade mode while guaranteeing the multicast upgrade, and the network resources can be saved furthest.

### Brief Description of Drawings

FIG. 1 is a flow chart of implementing a method for version upgrade of a set top box of the present invention; and
FIG. 2 is a schematic diagram of a composition structure of a system for version upgrade of a set top box of the present invention.

### Preferred Embodiments of the Present Invention

The basic idea of the present invention is in that: performing the version upgrade to a IPTV set top box by adopting a way of combining a multicast upgrade mode and an HTTP upgrade mode, that is, adopting the multicast upgrade mode when upgrade users are centralized, and switching to the HTTP upgrade mode when the upgrade users are few.

It needs to be illustrated that, the multicast upgrade mode means that an upgrade file is divided into several multicast data packets and sent on the network in the form of multicast; when the IPTV set top box detects that the version upgrade is needed to be performed, then it receives the multicast upgrade data sent by an upgrade server by directly joining in a multicast group; thus, although it lightens the pressure of the upgrade server, if the multicast upgrade data is sent on the network all the time, then network resources, which are already tense, in an IPTV system will be occupied largely. Then, the present invention further proposes the way of combining the multicast upgrade mode and the HTTP upgrade mode to perform the version upgrade to the IPTV set top box; and the multicast upgrade mode is adopted when the upgrade users are centralized, and the HTTP upgrade mode is adopted when the upgrade users are few. In this way, not only the speed and reliability of performing the version upgrade to the IPTV set top box can be guaranteed, but also the network resources can be saved.

In order to make the above-mentioned objectives, characteristics and advantages of the present invention more obvious and understandable, the present invention is further described in detail in combination with the accompanying drawings and the embodiments hereinafter.

It needs to be pointed out that, before illustrating that the version upgrade is performed to the IPTV set top box of the present embodiment, at first an implementation procedure and a switching principle of switching the multicast upgrade mode and the HTTP upgrade mode on the upgrade server of the IPTV system are explained, which mainly have the following three aspects.
1) The upgrade server sets or modifies an upgrade configuration file, mainly increases a multicast upgrade address configuration item and a multicast upgrade enabling item. It is identified whether the current adopted version upgrade way is the multicast upgrade mode or the HTTP upgrade mode by setting the multicast enabling item. For example: when the multicast upgrade enabling item is set as an enabling state, that is: the multicast upgrade is enabled, it is indicated that the multicast upgrade mode is currently adopted.
   Wherein, the upgrade configuration file includes: the version number of the current upgrade file, the multicast upgrade address configuration item, and the multicast upgrade enabling item, etc.
2) When starting a new round of version upgrade every time, the multicast upgrade mode is adopted in the first time period such as in 48 hours, and in the first time period such as after 48 hours, the version upgrade is stopped performing by adopting the multicast upgrade mode and the upgrade is performed to the IPTV set top box by switching to the HTTP upgrade mode. For example, after the first time period is over, the version upgrade adopting the multicast upgrade mode is stopped performing by modifying the multicast upgrade address configuration item in the upgrade configuration file and closing the multicast upgrade enabling item. Wherein, the modifying the multicast upgrade address configuration item in the upgrade configuration file can be: deleting the multicast upgrade address in the upgrade configuration file, or modifying the multicast upgrade address into the HTTP upgrade address.
   Wherein, the first time period is set according to the condition of the users actually connecting to the upgrade server, such as the number of the IPTV set top boxes, and the current network condition. Here, the first time period can adopt 48 hours as one particular time period starting to perform the multicast upgrade.
3) In the HTTP upgrade mode, when the users of the upgrade server, i.e., the number of connecting IPTV set top boxes, exceeds a threshold, then the upgrade is performed by switching to the multicast upgrade mode; the upgrade file is sent by the multicast mode in the second time period such as 24 hours; and after the second time period, the multicast upgrade is stopped, and the HTTP upgrade mode can also be switched back. For example, when the number of the IPTV set top boxes connecting to the upgrade server exceeds the threshold, the upgrade server modifies the multicast upgrade address configuration item in the upgrade configuration file as the multicast upgrade address, and enables the multicast upgrade, so as to switch to the multicast upgrade mode.

Wherein, the threshold can be set according to the performance of the upgrade server and the network state. In addition, the second time period is set according to the condition of the users actually connecting to the upgrade server, such as the number of the IPTV set top boxes, and the network state.

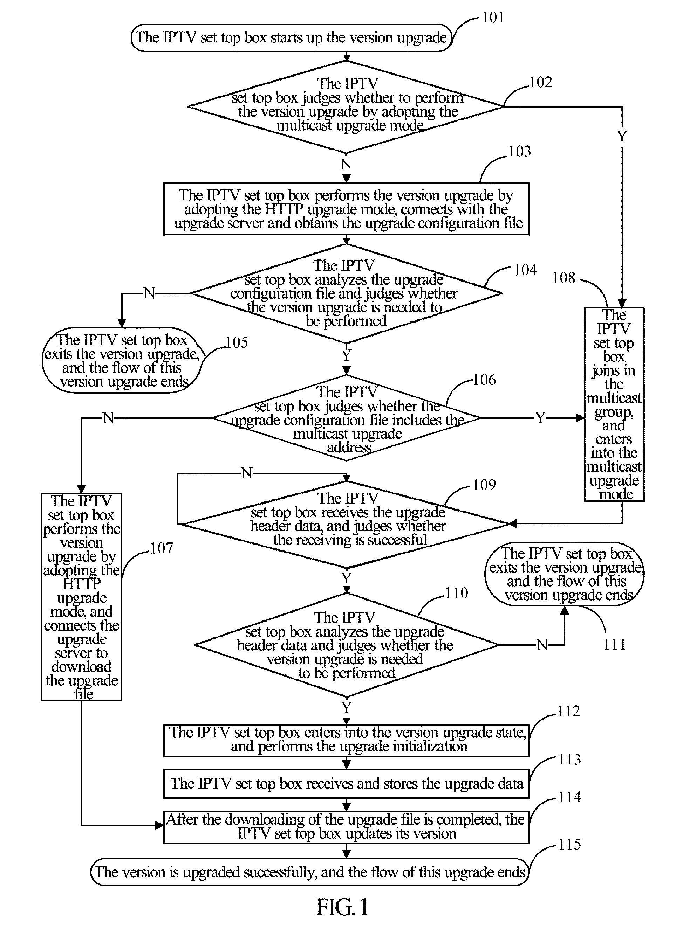

As shown in FIG. 1, the process of performing the version upgrade to the set top box according to the present invention mainly includes the following steps.

In step 101, the IPTV set top box starts up the version upgrade.

After the IPTV set top box boots, it starts up the process of the version upgrade. Here, the startup mode of the version upgrade mainly includes: automatically starting up when the IPTV set top box boots, or triggering the version upgrade by the service, such as, triggering the version upgrade when logging in an electronic program guide (EPG) to perform the authentication. Specifically, when the IPTV set top box boots and logs in the EPG to authorize, a newer IPTV service system will send an upgrade server address, and trigger the version upgrade process of the IPTV set top box directly. As to the older IPTV service system, the EPG does not send the upgrade server address, the IPTV set top box will obtain the corresponding upgrade address from its own configuration, thus starts up the upgrade flow.

In step 102, the IPTV set top box judges whether to perform the version upgrade by adopting the multicast upgrade mode, if the multicast upgrade mode is not adopted, then step 103 is executed; and if the multicast upgrade mode is adopted, then step 108 is executed;
wherein, the IPTV set top box judges whether the multicast upgrade mode or the HTTP upgrade mode is adopted according to the upgrade server address configured by itself first, if the configured server upgrade address is a multicast upgrade address, then the multicast upgrade mode is selected; and if the configured upgrade server address is an HTTP upgrade address, then the HTTP upgrade mode is selected.

In addition, as to the IPTV set top box without configuring the upgrade server address, it can be judged whether the multicast upgrade mode is adopted according to the upgrade address, such as the multicast upgrade address or the HTTP upgrade address, sent by a strategy server in the IPTV system. If the strategy server is the multicast upgrade address, then the multicast upgrade mode is selected; and if the issued upgrade address is the HTTP upgrade address, then the HTTP upgrade mode is selected.

Here, the upgrade server and the strategy server are all modules in the IPTV system, and the strategy server can send the multicast upgrade address to the IPTV set top box without storing the multicast upgrade address to notify the IPTV set top box to perform the upgrade.

In step 103, the IPTV set top box performs the version upgrade by adopting the HTTP upgrade mode, connects with the upgrade server and obtains the upgrade configuration file.

An upgrade server address is configured as an HTTP connection mode, or what the strategy server sends is an HTTP link address, and the set top box downloads the upgrade configuration file from the upgrade server.

In step 104, the IPTV set top box analyzes the upgrade configuration file, and judges whether the version upgrade is needed to be performed, if the version upgrade is not needed to be performed, then step 105 is executed; if the version upgrade is needed to be performed, then step 106 is executed.

The IPTV set top box analyzes and obtains from the upgrade configuration file the information such as the version number of the current upgrade file, the HTTP upgrade address/the multicast upgrade address, the multicast upgrade enabling item, etc. Then, it determines whether the upgrade is needed according to the version number of the current upgrade file and the version number of the IPTV set top box itself. That is to say, the version number of the current upgrade file obtained by analyzing is compared with the corresponding version number in the IPTV set top box, if they are different, then the version upgrade is performed; if they are the same, then the version upgrade is not performed.

It needs to be illustrated that, each module in the IPTV set top box, such as a common module, a startup logo module, a security module, etc., has its own version number. The version number of each current upgrade file is compared with the version number of its corresponding module, if they are different, then that module is needed to perform the upgrade; if they are the same, then that module is not needed to perform the upgrade.

In step 105, the IPTV set top box exits the version upgrade, and the flow of this version upgrade ends.

In step 106, the IPTV set top box judges whether the upgrade configuration file includes the multicast upgrade address, if the upgrade configuration file does not include the multicast upgrade address, then step 107 is executed; if the upgrade configuration file includes the multicast upgrade address, then step 108 is executed.

After the IP set top box judges and acquires that it needs to perform the version upgrade, it further judges the adopted upgrade mode according to the upgrade configuration file configured by the upgrade server; that is: if the upgrade configuration file includes the multicast upgrade address, and the multicast upgrade enabling item is in an enabling state, then it is indicated that the set top box enters into the multicast upgrade mode; otherwise, if the upgrade configuration file does not include the multicast upgrade address, or only includes the HTTP upgrade address, then it continues to perform the HTTP upgrade mode.

Here, the multicast upgrade mode adopted by the IPTV set top box can obtain the required multicast upgrade address through two ways.

I, the IPTV system directly configures the upgrade server address of the IPTV set top box as the multicast upgrade address, or sends the multicast upgrade address to the IPTV set top box through the strategy server; this method is a simple multicast upgrade, and can be used in a special condition and test.

II, the IPTV system configures the upgrade server address as the HTTP connection mode, or the strategy server sends the HTTP link address, and the IPTV set top box downloads the upgrade configuration file from the upgrade server. If the upgrade configuration file includes the multicast upgrade address, and the multicast upgrade is enabled, then it is indicated that the IPTV set top box performs the version upgrade by adopting the multicast upgrade mode; otherwise, the HTTP upgrade mode is adopted. This method is exactly the compatible version upgrade way of the multicast upgrade mode and the HTTP upgrade mode which is adopted by the present embodiment, that is, it is judged that which kind of upgrade mode is adopted according to the upgrade configuration file configured by the upgrade server, and the corresponding upgrade operation is performed, for example, the specifically required upgrade file is downloaded from the upgrade server.

In step 107, the IPTV set top box performs the version upgrade by adopting the HTTP upgrade mode, and connects to the upgrade server to download the upgrade file, then step 114 is executed;
wherein, when the IPTV set top box enters into an upgrade state, it stops other services, such as watching program, etc., and connects to the upgrade server to perform the whole downloading of the upgrade file.

In step 108, the IPTV set top box joins in a multicast group, and enters into the multicast upgrade mode.

When the multicast upgrade mode is adopted, in order to enable the IPTV set top box which joins in the multicast group can judge and acquire whether the version upgrade is needed to be performed, the upgrade server performs some treatments when sending the multicast upgrade data, to guarantee the IPTV set top box perform the version upgrade only when needing the upgrade. Its main processing procedure is that: the upgrade server divides the multicast upgrade data into two kinds when sending the multicast upgrade data to the multicast group, including the upgrade header data and the upgrade data. Wherein, the upgrade header data are sent to the IPTV set top box before the upgrade file, which includes:
1), the version number of the current upgrade file;
2), the block size of the upgrade file;
3), the block quantity of the upgrade file.

Wherein, the version number of the current upgrade file is used for judging whether the version upgrade is needed to be performed. In addition, the IPTV set top box, when receiving the upgrade file, can judge whether the upgrade file is received completely by the block size and quantity of the upgrade file. Here, the upgrade data is divided into several multicast data packets according to the appropriate size, such as 1.5kb; and each multicast data packet has its own serial number, and that serial number indicates the position of its corresponding multicast data packet in the upgrade file. Wherein, the appropriate size is divided by the upgrade server according to the network load condition, and the present embodiment can adopt 1.5kb to act as the reference of dividing the multicast data packet, and it can also perform the processing of dividing the packet if exceeding the limit on the size of the data packet by the network.

In step 109, the IPTV set top box receives the upgrade header data, and judges whether receiving successfully, if the receiving is unsuccessful, then it continues to receive the upgrade header data until the receiving is successful; if the receiving is successful, then step 110 is executed;
wherein, when the IPTV set top box is receiving the multicast upgrade data, it receives the upgrade header data in the multicast upgrade data first.

In step 110, the IPTV set top box analyzes the upgrade header data and judges whether the version upgrade is needed to be performed, if the version upgrade is not needed to be performed, then step 111 is executed; if the version upgrade is needed to be performed, then step 112 is executed.

The IPTV set top box analyzes and obtains from the upgrade header data: the parameters such as the version number of the current upgrade file, the block size of the upgrade file, the block quantity of the upgrade file, etc. Moreover, the IPTV set top box judges whether the version upgrade is needed to be performed according to the version number of the current upgrade file, if the version number of the current upgrade file is different from the corresponding version number in the IPTV set top box, then the version upgrade is performed; if the version number of the current upgrade file is the same as the corresponding version number in the IPTV set top box, then the version upgrade is not performed.

In step 111, the IPTV set top box exits the version upgrade, and the flow of this version upgrade ends.

In step 112, the IPTV set top box enters into the version upgrade state, and performs the upgrade initialization;
wherein, the operations of the IPTV set top box performing the upgrade initialization mainly include: stopping other services such as watching the program, interface switching such as switching from the watching interface or menu interface to the upgrade interface.

In step 113, the IPTV set top box receives and stores the upgrade data.

Here, the IPTV set top box continues to receive the multicast upgrade data, and now what received is the upgrade data sent by the upgrade server after the upgrade header data; the upgrade data is the upgrade file which is divided into several multicast data packets, in other words, the upgrade file is composed of the upgrade data. Wherein, each multicast data packet has its own serial number, and that serial number indicates the position of its corresponding multicast data packet in the upgrade file. Moreover, the IPTV set top box stores the received multicast data packet according to the serial number.

In step 114, after the upgrade file is downloaded completely, the IPTV set top box updates its version.

Here, when performing the version upgrade by adopting the multicast upgrade module, the IPTV set top box also needs to judge whether the current upgrade file is already received completely. The present embodiment judges whether the upgrade file is received completely by judging the number of the received multicast data packets. Wherein, the size of the whole upgrade file can be obtained through the block size of the upgrade file and the block quantity of the upgrade file, that is, the size of the whole upgrade file is the product of the block size of the upgrade file multiplying the block quantity. In addition, for the upgrade file downloaded through the HTTP mode, it need not to judge whether the downloading is completed, because finishing downloading the whole file is finishing downloading the upgrade file.

After the upgrade file is downloaded completely, the processing of the multicast upgrade mode is basically identical with that of the HTTP upgrade mode, which is mainly that: after the upgrade file required by the upgrade module of the IPTV set top box is downloaded completely, the version of the corresponding upgrade module in the IPTV set top box is flashed and replaced by burning, that is, the upgrade file is burnt to the IPTV set top box.

In step 115, the version upgrades successfully, and the flow of this upgrade ends.

For each above-mentioned embodiment, in order to describe simply, it is described as the combination of a series of actions; however, those skilled in the art should know that, the present invention is not limited by the order of the described actions, because some steps can adopt other orders or perform at the same time according to the present invention.

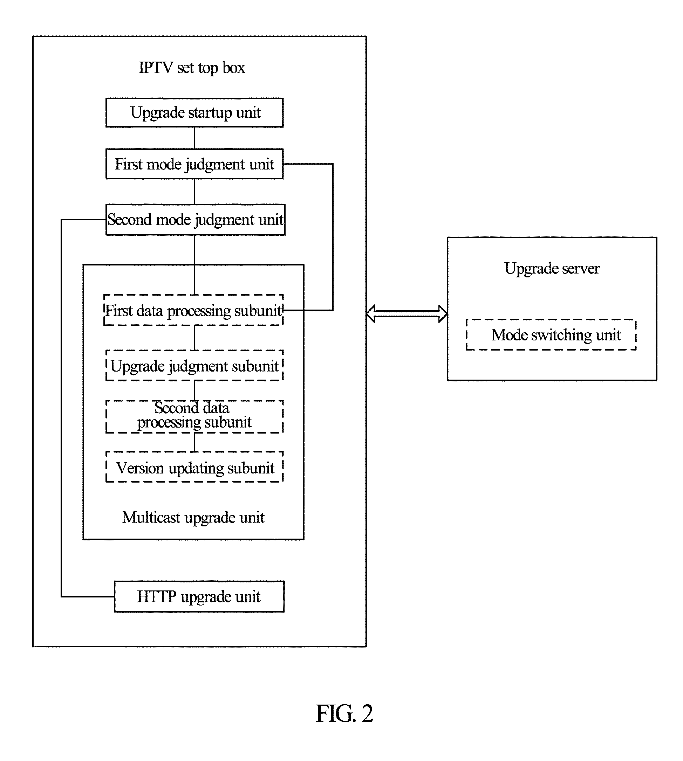

In order to realize the above-mentioned method, the present invention further provides a system for version upgrade of a set top box, and as shown in FIG. 2, the system includes an upgrade server and an IPTV set top box; wherein,
the upgrade server is configured to provide an upgrade configuration file; and
the IPTV set top box is configured to start up version upgrade and judge whether to perform the version upgrade by adopting a multicast upgrade mode, download and analyze the upgrade configuration file on the upgrade server when the multicast upgrade mode is not adopted, and select a version upgrade mode according to the upgrade configuration file and perform the version upgrade.

In the above-mentioned system, the upgrade server further includes: a mode switching unit, which is configured to, when starting a new round of the version upgrade, make the IPTV set top box adopt the multicast upgrade mode by setting the upgrade configuration file by the upgrade server, stop adopting the multicast upgrade mode after a first time period, and switch to an HTTP upgrade mode; wherein, the upgrade configuration file comprises: a version number of a current upgrade file, a multicast upgrade address configuration item, and a multicast upgrade enabling item; the first time period depends on the number of the IPTV set top boxes actually connecting to the upgrade server and a current network condition.

In the above-mentioned system, the upgrade server includes: the mode switching unit, which is configured to set a threshold which measures the number of connecting IPTV set top boxes by the upgrade server; in the HTTP upgrade mode, when the number of IPTV set top boxes connecting to the upgrade server exceeds the threshold, then switch to the multicast upgrade mode, perform the version upgrade to the IPTV set top boxes, and stop the multicast upgrade after a second time period; wherein, the threshold is set according to performances of the upgrade server and a network condition; and the second time period is set according to the number of the IPTV set top boxes actually connecting to the upgrade server and the network condition.

In the above-mentioned system, the IPTV set top box includes: an upgrade startup unit, a first mode judgment unit, a second mode judgment unit, a multicast upgrade unit and an HTTP upgrade unit; wherein,
the upgrade startup unit is configured to start up the version upgrade;
the first mode judgment unit is configured to judge whether to perform the version upgrade by adopting the multicast upgrade mode, and notify the second mode judgment unit when the version upgrade is not performed by adopting the multicast upgrade mode; and notify the multicast upgrade unit when performing the version upgrade by adopting the multicast upgrade mode;
the second mode judgment unit is configured to download and analyze the upgrade configuration file on the upgrade server, judge whether the upgrade configuration file includes a multicast upgrade address, notify the multicast upgrade unit when the upgrade configuration file includes the multicast upgrade address and enabling the multicast upgrade, and notify the HTTP upgrade unit when the upgrade configuration file does not include the multicast upgrade address;
the multicast upgrade unit is configured to perform the version upgrade by adopting the multicast upgrade mode; and
the HTTP upgrade unit is configured to perform the version upgrade by adopting the HTTP upgrade mode.

In the above-mentioned system, the multicast upgrade unit further includes: a first data processing subunit, an upgrade judgment subunit, a second data processing subunit and a version updating subunit; wherein,
the first data processing subunit is configured to receive and analyze upgrade header data;
the upgrade judgment subunit is configured to judge whether to perform upgrade according to a version number of a current upgrade file analyzed and obtained by the first data processing subunit, and notify the second data processing subunit when performing the upgrade, and exit this upgrade when not performing the upgrade;
the second data processing subunit is configured to receive and store upgrade data, and is configured to judge whether the upgrade data is received completely;
the version updating subunit is configured to, after the upgrade data is received completely, update a version according to the upgrade data;
wherein, the upgrade header data comprises: the version number of the current upgrade file, a block size of the upgrade file and a block quantity of the upgrade file; and the upgrade data is the upgrade file which is divided into several multicast data packets.

In the above-mentioned embodiments, the description of each embodiment has the emphasis, and if the part is not detailed in a certain embodiment, it can refer to the relevant description of other embodiments. The above description is only the preferred embodiments of the present invention, which is intended to illustrate and explain the present invention and is not intended to limit the protection scope of the present invention. Any modification and equivalent made to the present invention within the spirit of the present invention and the protection scope of the claims should fall into the protection scope of the present invention.

## Claims

1. A method for version upgrade of a set top box, comprising:
an internet protocol television (IPTV) set top box starting up version upgrade, and judging whether to perform the version upgrade by adopting a multicast upgrade mode, and downloading and analyzing an upgrade configuration file on an upgrade server when the multicast upgrade mode is not adopted; and
if the upgrade configuration file includes a multicast upgrade address and enabling multicast upgrade, then the IPTV set top box performing the version upgrade by adopting the multicast upgrade mode; if the upgrade configuration file does not include the multicast upgrade address, then performing the version upgrade by adopting a hypertext transfer protocol (HTTP) upgrade mode.

2. The method according to claim 1, further comprising the upgrade server setting a version upgrade mode, wherein, the process of setting the version upgrade mode further comprises:
when starting a new round of the version upgrade, the upgrade server making the IPTV set top box adopt the multicast upgrade mode by setting the upgrade configuration file, stopping adopting the multicast upgrade mode after a first time period, and switching to the HTTP upgrade mode; and
wherein, the upgrade configuration file comprises: a version number of a current upgrade file, a multicast upgrade address configuration item and a multicast upgrade enabling item; and the first time period depends on the number of IPTV set top boxes actually connecting to the upgrade server and a current network condition.

3. The method according to claim 1, further comprising the upgrade server setting a version upgrade mode, wherein, the process of setting the version upgrade mode further comprises:
the upgrade server setting a threshold which measures the number of connecting IPTV set top boxes;
in the HTTP upgrade mode, when the number of the IPTV set top boxes connecting to the upgrade server exceeds the threshold, then switching to the multicast upgrade mode, performing the version upgrade to the IPTV set top boxes, and stopping the multicast upgrade after a second time period;
wherein, the threshold is set according to performances of the upgrade server and a network condition; and the second time period is set according to the number of IPTV set top boxes actually connecting to the upgrade server and the network condition.

4. The method according to claim 1, 2 or 3, wherein, the judging whether to adopt the multicast upgrade mode comprises:
the IPTV set top box reading an upgrade server address of the IPTV set top box, if the upgrade server address is the multicast upgrade address, then adopting the multicast upgrade mode; and if the upgrade server address is an HTTP upgrade address, then downloading and analyzing the upgrade configuration file on the upgrade server; or,
the IPTV set top box judging whether to adopt the multicast upgrade mode according to an upgrade address sent by a strategy server; if the upgrade address sent by the strategy server is the multicast upgrade address, then selecting the multicast upgrade mode; and if the upgrade address sent by the strategy server is an HTTP upgrade address, then selecting the HTTP upgrade mode.

5. The method according to claim 1, 2 or 3, wherein, the IPTV set top box adopting the multicast upgrade mode comprises:
the IPTV set top box joining in a multicast group, receiving and analyzing upgrade header data; judging whether to upgrade, if not upgrading, then exiting the version upgrade; and if upgrading, then performing an upgrade initialization, and receiving and storing upgrade data; and, after the upgrade data is received completely, the IPTV set top box updating a version according to the upgrade data; and
wherein, the upgrade header data comprises: a version number of a current upgrade file, a block size of the upgrade file and block quantity of the upgrade file; and the upgrade data are the upgrade file which is divided into several multicast data packets.

6. The method according to claim 5, wherein, the IPTV set top box judging whether to upgrade comprises:
the IPTV set top box judging whether to perform the version upgrade according to the version number of the current upgrade file analyzed and obtained from the upgrade header data; and
if the version number of the current upgrade file is different from the corresponding version number in the IPTV set top box, then performing the version upgrade; and if the version number of the current upgrade file is the same with the corresponding version number in the IPTV set top box, then not performing the version upgrade.

7. The method according to claim 5, further comprising judging whether the upgrade data is received completely, which is:
judging whether the upgrade data is received completely according to the block size of the upgrade file and the block quantity of the upgrade file analyzed and obtained from the upgrade header data; if a product of the block size of the upgrade file and the block quantity of the upgrade file is the same as the size of the upgrade file, then receiving the upgrade data completely; and if the product of the block size of the upgrade file and the block quantity of the upgrade file is less than the size of the upgrade file, then continuing to receive the upgrade data.

8. A system for version upgrade of a set top box, comprising an upgrade server and an internet protocol television (IPTV) set top box; wherein,
the upgrade server is configured to provide an upgrade configuration file; and
the IPTV set top box is configured to start up version upgrade and judge whether to perform the version upgrade by adopting a multicast upgrade mode, download and analyze the upgrade configuration file on the upgrade server when the multicast upgrade mode is not adopted, and select a version upgrade mode according to the upgrade configuration file and perform the version upgrade.

9. The system according to claim 8, wherein, the upgrade server further comprises:
a mode switching unit, configured to, when starting a new round of the version upgrade, make the IPTV set top box adopt the multicast upgrade mode by setting the upgrade configuration file by the upgrade server, stop multicast upgrade after a first time period, and switch to a hypertext transfer protocol (HTTP) upgrade mode; and/or
the mode switching unit, configured to set a threshold which measures the number of connecting IPTV set top boxes by the upgrade server; in the HTTP upgrade mode, when the number of IPTV set top boxes connecting to the upgrade server exceeds the threshold, then switch to the multicast upgrade mode, perform the version upgrade to the IPTV set top boxes, and stop the multicast upgrade after a second time period;
wherein, the upgrade configuration file comprises: a version number of a current upgrade file, a multicast upgrade address configuration item, and a multicast upgrade enabling item; the first time period depends on the number of the IPTV set top boxes actually connecting to the upgrade server and a current network condition; the threshold is set according to performances of the upgrade server and a network condition; and the second time period is set according to the number of the IPTV set top boxes actually connecting to the upgrade server and the network condition.

10. The system according to claim 8 or 9, wherein, the IPTV set top box comprises: an upgrade startup unit, a first mode judgment unit, a second mode judgment unit, a multicast upgrade unit and an HTTP upgrade unit; wherein,
the upgrade startup unit is configured to start up the version upgrade;
the first mode judgment unit is configured to judge whether to perform the version upgrade by adopting the multicast upgrade mode, and notify the second mode judgment unit when the version upgrade is not performed by adopting the multicast upgrade mode; and notify the multicast upgrade unit when performing the version upgrade by adopting the multicast upgrade mode;
the second mode judgment unit is configured to download and analyze the upgrade configuration file on the upgrade server, judge whether the upgrade configuration file includes a multicast upgrade address, notify the multicast upgrade unit when the upgrade configuration file includes the multicast upgrade address and enabling the multicast upgrade, and notify the HTTP upgrade unit when the upgrade configuration file does not include the multicast upgrade address;
the multicast upgrade unit is configured to perform the version upgrade by adopting the multicast upgrade mode; and
the HTTP upgrade unit is configured to perform the version upgrade by adopting the HTTP upgrade mode.

11. The system according to claim 10, wherein, the multicast upgrade unit further comprises: a first data processing subunit, an upgrade judgment subunit, a second data processing subunit and a version updating subunit; wherein,
the first data processing subunit is configured to receive and analyze upgrade header data; the upgrade judgment subunit is configured to judge whether to perform upgrade according to a version number of a current upgrade file analyzed and obtained by the first data processing subunit, and notify the second data processing subunit when performing the upgrade, and exit this upgrade when not performing the upgrade;
the second data processing subunit is configured to receive and store upgrade data, and is configured to judge whether the upgrade data is received completely;
the version updating subunit is configured to, after the upgrade data is received completely, update a version according to the upgrade data;
wherein, the upgrade header data comprises: the version number of the current upgrade file, a block size of the upgrade file and block quantity of the upgrade file; and the upgrade data is the upgrade file which is divided into several multicast data packets.
